# EUROPEAN PATENT APPLICATION

(11) **EP 2 437 242 A1**
(43) Date of publication of application: **04.04.2012**
(21) Application number: 10181578.5
(22) Date of filing: 29.09.2010
(51) Int. Cl.: G09F 13/04, G02B 6/00

(54) **Lighting device**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

There is provided a self illuminating decorative lighting device (100) comprising at least one light source (107), a top light guide layer (101), and a bottom light guide layer (105), which top light guide layer and bottom light guide layer are both arranged for receiving light from the light source. A decorative layer (103) is sandwiched between the top light guide layer and the bottom light guide layer. At least one light out-coupling structure is arranged for providing illumination of the decorative layer, and the lighting device is arranged such that light for illumination of the decorative layer originates from both the top light guide layer and the bottom light guide layer.

## Description

### FIELD OF THE INVENTION

The present invention relates generally to a self illuminating decorative lighting device, and more particularly to a self illuminating decorative lighting device comprising light guide layers.

### BACKGROUND OF THE INVENTION

Aesthetically beautiful decorative panels are often used for providing attractive indoor and outdoor architectural installations. The panels cleverly employ the surface color and texture of materials such as sandblasted glass, wood, or ceramic. Typically, resins panels are used by architects and interior designers to construct interior and external decorative and functional items, such as space separators, slide doors, cabinet coverings, wall panels etc. The resin panels are usually multi-layer products with a top covering layer and a bottom covering layer in between which a decorative layer is sandwiched. The covering layers, and optionally additional reinforce layers, are typically made from e.g. Poly(methyl methacrylate) "PMMA", Polyethylene terephthalate "PETG", or glass. When properly illuminated, these panels will generate a specifically mood-satisfactory atmosphere. The most frequent practice of using such resin panels is to provide a combination of front lighting and back lighting through different luminaries installed externally in front of or at both sides of the resin panels. The change of light emission properties of these light sources, such as light intensity, direction, color temperature, and light level gradient alongside its vertical or horizontal plane, will affect the appearance of these panels. Further, the generation of such an atmosphere thus highly depends on an artificial and/or natural external lighting environment.

It is known to use self-illuminating panels for decoration, to eliminate the dependency of the external lighting environment. US 2010/0061115 A1 discloses a one-way see through illumination system which is constructed from a light guide panel, a front-illuminable image film, and a light injector. The light injector injects light into the light guide panel at a suitable angle for total internal reflection of the injected light at the surfaces of the light guide panel. The image film includes a half-toned front-illuminable image pattern that extracts light from the light guide panel. When active, light from the light guide panel front illuminates the image pattern for viewing by a front side view, while a back side viewer can see through the image pattern.

While the system described above is generally effective in accomplishing a way to reduce the dependency of the external lighting environment, for a front viewer it may provide a low contrast between decorative elements of the image pattern, and areas of the image film between these decorative elements, since light will be emitted towards the viewer from the light guide panel at all positions of the image film, both at areas with, and without, the image pattern. Further, such a light guide panel will emit a lot of light in undesirable directions. E.g. when the light guide panel is wall mounted, light that does not reflect off of the image pattern, will pass through to the wall, and be 'lost'. This reduces the energy efficiency of such an illumination system drastically.

### SUMMARY OF THE INVENTION

It is an object of the present invention to provide an improved lighting device that alleviates at least one of the above-mentioned drawbacks of the prior art.

This object is achieved by a lighting device and a method according to the present invention as defined in the appended independent claim. Preferred embodiments are set forth in the dependent claims and in the following description and drawings.

Thus, in accordance with the present inventive concept, there is provided a self illuminating decorative lighting device comprising at least one light source, a top light guide layer arranged for receiving light from the at least one light source, a bottom light guide layer arranged for receiving light from the at least one light source, and a decorative layer sandwiched between the top light guide layer and the bottom light guide layer. At least one light out-coupling structure is arranged for providing illumination of the decorative layer. The lighting device is arranged such that the decorative layer receives light from both the top light guide layer and the bottom light guide layer.

Thereby, a lighting device is provided in which illumination from the back side and the front side of the decorative layer is advantageously achieved. The dependency of the exterior lighting environment illumination is thus advantageously decreased. Light injected into the top light guide layer and the bottom light guide layer may be efficiently controlled to suit a specific decorative layer and to provide different appearances or different atmospheric light modes of the lighting device at different times. Due to the illumination from both the back side and the front side of the decorative layer, altering the light from the light source, e.g. by means of changing intensity, distribution and/or color may advantageously and effectively be utilized for compensating different illumination conditions arising from presence of day light, e.g. sun light changes with time and weather, or absence of day light. In the night-time, it is also possible that end users want to have a cozy atmosphere, where the light level of the lighting device is set to a minimum level, while at the same time enjoying the beautiful appearance of the decorative panel.

By illuminating the decorative layer from two directions, the appearance of the decorative material is emphasized. Properties of the decorative material, like e.g. color, textures and haptics, are advantageously viewed. Further, by integrating the light sources in the lighting device no time and space consuming installation of external light sources is required. The decorative layer may be viewed from a front side of the lighting device, as well as a back side of the device.

In accordance with an embodiment of the lighting device, each light out-coupling structure is arranged at one of an upper surface of the top light guide layer, a lower surface of the bottom light guide layer, or an interface between the decorative layer and the top light guide layer or the bottom light guide layer, which is advantageous.

In accordance with an embodiment of the lighting device, the top light guide layer and the bottom light guide layer further comprises a respective light in-coupling structure arranged for receiving light from the light source. This is advantageous for providing a high light efficiency of the lighting device. Each light in-coupling structure may be arranged on a side edge of either the top light guide layer or the bottom light guide layer. An edge-lit lighting device is feasible since the light source may then be hidden from being directly exposed to the viewer, while providing light into the lighting device. Further, providing the one or more light sources on the edge, allows for keeping the lighting device thin. Light emission can be arranged towards one direction or more, e.g. for a rectangular lighting device towards two perpendicular directions of the lighting device.

In accordance with an embodiment of the lighting device, at least one light out-coupling structure is arranged by means of providing a microstructure.

In accordance with an embodiment of the lighting device, the microstructure is provided by means of laser dotting, sand blasting, screen printing of dots of paint, laser ablation, or molding a microstructure. The light out-coupling structure may be arranged by means of providing at least a portion of the lower surface of the top light guide layer and/or an upper surface of the bottom light guide layer with structures. That is, the light guide plates may be provided with randomly arranged (micro) structures that advantageously increases, and determines the position of, the extraction of light from the light guide. The structures may be dots, non-flat plates, and/or V-grooves provided by means of paint, laser ablation, screen printing, molding a structure into the surface etc., and in any shape (random, patterned), and density. The density may be selected to a few dots per square cm, or a high number of dots per square cm, the applicable number of dots per square cm being determined by the application.

By applying the light out-coupling structure locally and preferably aligned with the actual pattern of the decorative layer, the contrast between the decoration pattern and surrounding areas is increased as areas which are surrounding the decoration pattern then receives less light from the light guide layers. Thereby there is provided a lighting device in which mainly the decorative pattern is illuminated, without creating a background illumination. Further, the lighting device has a high energy efficiency, by not wasting any light.

In accordance with an embodiment of the lighting device, at least one light out-coupling structure is arranged by means of decorative elements of the decorative layer.

This is advantageous as the need for aligning a light out-coupling structure with the decorative pattern during manufacturing is removed. This provides for a simpler and faster manufacturing process. Further, the manufacturing of lighting devices comprising complicated, and for each lighting device unique decoration patterns, is in this way drastically simplified.

In accordance with an embodiment of the lighting device, the decorative layer is arranged by decorative elements arranged as a relief pattern on a carrier layer, wherein an upper surface of the relief pattern is arranged in optical contact with the lower surface of the top light guide layer, thereby providing a light out-coupling structure.

In accordance with an embodiment of the lighting device, the decorative layer is consisting of decorative elements arranged as a relief pattern on the bottom light guide layer, wherein an upper surface of the relief pattern is arranged in optical contact with the lower surface of the top light guide layer and a lower surface of the relief pattern is arranged in optical contact with an upper surface of the bottom light guide layer, thereby providing the light out-coupling structure.

In accordance with an embodiment of the lighting device, at least a portion of the upper or lower surfaces of the relief pattern is arranged to be or comprise one of a deformable surface, and a liquid or sticky surface, which increases the optical contact with the adjacent light guide layer.

In accordance with an embodiment of the lighting device, the decorative elements are at least one of non-transparent, reflecting, colored, and diffuse.

In accordance with an embodiment of the lighting device, at least one of the top light guide layer and the bottom light guide layer is a liquid curable resin, which is advantageous.

In accordance with an embodiment of the lighting device, it further comprises a reinforcing layer, which is advantageous.

In accordance with an embodiment of the lighting device, the decorative layer is made of fabric, leaves or other natural and/or synthetic materials. The present inventive concept is thus applicable for a variety of decorative materials, which may be arranged as ornamentations or to cover the whole decorative layer to provide an impression of nature or a certain atmosphere in a room.

In accordance with an embodiment of the lighting device, the top light guide layer and the bottom light guide layer each is one of a transparent and a translucent layer.

In accordance with an embodiment of the lighting device, the lighting device further comprises a reflective layer. The reflective layer may be arranged at the lower surface of the bottom light guide layer to direct any light being emitted downwards in the bottom light guide layer back upwards, and towards the decorative layer, thereby increasing the amount of light in the upward direction.

These and other aspects, features, and advantages of the invention will be apparent from and elucidated with reference to the embodiments described hereinafter.

### BRIEF DESCRIPTION OF THE DRAWINGS

The invention will now be described in more detail and with reference to the appended drawings in which:
Figs. 1a and 1b are schematic illustrations of embodiments of a lighting device according to the present invention; and
Figs. 2a and 2b schematically illustrate embodiments of a lighting device according to the present invention.

### DETAILED DESCRIPTION OF THE EMBODIMENTS

The below embodiments are provided by way of example so that this disclosure will be thorough and complete, and will fully convey the scope of the invention to those skilled in the art. Like numbers refer to like elements throughout.

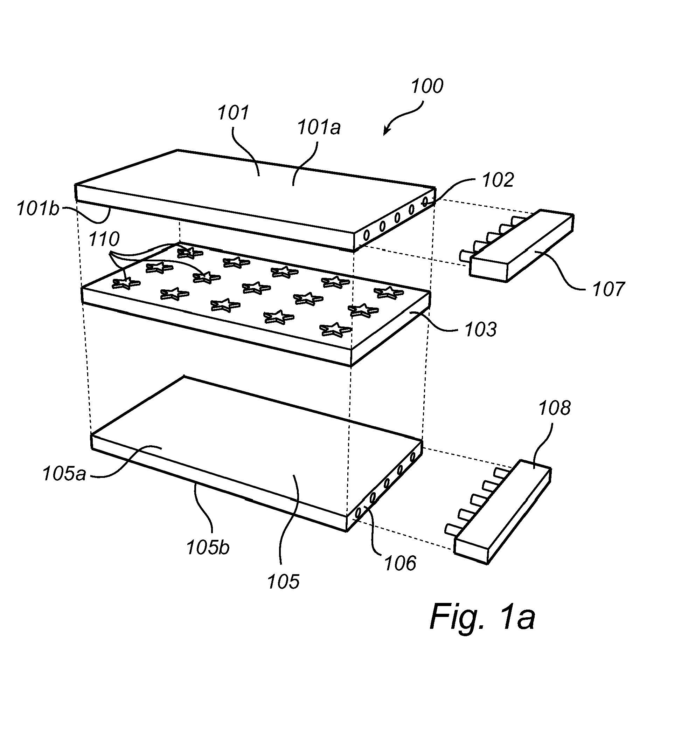

Fig. 1a is a schematic illustration of a lighting device 100 according to an embodiment of the present invention. For clarity the lighting device 100 is illustrated in an exploded view. The lighting device 100 comprises a top light guide layer 101 made of a liquid curable resin and which is at a side edge provided with a light in-coupling structure 102. The light in-coupling structure 102 is here an array of areas adapted for receiving light from an array of traditional light emitting diodes LEDs comprised in a light source 107. Each area in the light in-coupling structure 102 may be provided with a rough surface, or be a surface of a small indent, or have a saw tooth indentation.

In alternative embodiments of the lighting device the light in-coupling structure may be realized on the entire area of the side edge, and may be by a plain surface. In alternative embodiments, the light in-coupling structure comprises additional light guiding structures for influencing the light distribution in the light guide layer, e.g. to improve a uniform distribution of light in the light guide layer.

To continue, the lighting device 100 further comprises a bottom light guide layer 105 made of a liquid curable resin. In the same manner as described above for the top light guide layer 101, a side edge of the bottom light guide layer 105 is provided with a light in-coupling structure 106, here being an array of indents adapted for receiving light from an array of traditional light emitting diodes LEDs comprised in a light source 108. The top light guide layer 101 and the bottom light guide layer 105 can be provided in any suitable transparent or translucent material, like for instance glass, Poly(methyl methacrylate) (PMMA), or copolymerized Polyethylene terephthalate (PETG). Typically a transparent material with a very low absorption of visible light is preferred. In large lighting devices (> 1m²), the optical absorption of the material will have to be kept low, as a large amount of the light that is being injected into the light guide layers 101, 105 is otherwise absorbed by the material before reaching the viewer. In small lighting devices this effect is negligible.

For simplicity the power source, control circuitry and any housing for the lighting device have been left out in the illustrations.

To continue, a decorative layer 103 is sandwiched between the top light guide layer 101 and the bottom light guide layer 105. The decorative layer 103 is in this embodiment a compressed layer of decorative elements 110, which here are colored stars stamped out of a nontransparent plastic sheet.

In embodiments of the lighting guide, the decorative layer 103 may comprise natural materials, such as bamboo rings, foliage, twig, shell, fishnet, fibers, fabrics, and metal wires, etc. or artificial materials, such as plastic color filters, synthetic fibers etc. In some cases, the decorative layer 103 may be multi-layered such that the natural or artificial decoration material is sandwiched between transparent support layers. In another embodiment the decoration material may be embedded in the decorative layer during manufacturing, e.g. added before polymerization of a polymer film. Further, in accordance to embodiments of the lighting device, the decorative layer is made of materials with highly diffusive and reflectance properties, such as White97 film offered by WhiteOptics. The arrangement of the decorative layer is partly based on design choices to provide an attractive look, and partly based on providing a good enough light efficiency, e.g. material with a certain reflection will appear brighter at a given power consumption of the lighting device.

To continue with the embodiment as described with reference to Fig. 1a, the light sources, 107 and 108, are attached to (or alternatively positioned close to) the light in-coupling structures, 102 and 106, of the respective top and bottom light guide layer, 101 and 105. When activated, light is provided into the light guide layers, 101 and 105. A respective light out-coupling structure is arranged at the interface between the decorative layer 103 and a lower surface 101b of the top light guide layer 101, and at the interface between the decorative layer 103 and an upper surface 105a of the bottom light guide layer 105. The light out-coupling structures thereby provide illumination of the decorative layer 103 originating from both the top light guide layer 101 and the bottom light guide layer 105.

In an embodiment of the lighting device, the light out-coupling structures are realized at the lower surface 101b of the top light guide layer 101, and at the upper surface 105a of the bottom light guide layer 105, by means of roughening these surfaces, 101b and 105a. Providing the rough surface can be done by means of laser dotting, laser blasting, sand blasting, laser ablation, molding a microstructure, or other suitable mechanisms.

In an embodiment of the lighting device the light out-coupling structure is provided by means laser blasting of either the upper or lower surface, 101a or 101b, of the light guide layer 101. As laser blasted dots are about 50% transparent, and 50% diffusive reflective, this has the effect that about 50% of the light escapes on both sides of the laser blasted surface. Thus, this kind of light out-coupling structure may be applied on either the top or the bottom surface of each light guide layer 101, 105.

In an embodiment of the lighting device, the light out-coupling structure is realized with screen painting of dots of paint, e.g. white paint dots, on the upper surface 101a of the top light guide layer 101. Light injected in the top light guide layer 101 will be reflected within the top light guide layer 101, until it hits a white paint dot, and subsequently exits the top light guide layer 101 via its lower surface 101b towards the decorative layer 103, due to the diffuse reflective properties of the white paint. White dots of paint as light out-coupling structure directs over 90% of the light from the light guide layer in the direction towards the decorative layer, but also blocks over 90% of light that returns from the decorative elements.

The light out-coupling structure enables light traveling in the top light guide layer 101 to couple downwards towards the decorative elements 110. In an alternative embodiment, the light out-coupling structure is realized by utilizing V-groove structures.

When providing the light out-coupling structures, the choice of best or most efficient technology for light out-coupling structure (paint, dots, microstructures etc.) is preferably selected with respect to e.g. light coupling requirements and size percentage of coverage of decorative elements in the decorative layer of the specific lighting device.

According to an embodiment of the lighting device, the light out-coupling structure on the lower surface of the top light guide layer and/or the upper surface of the bottom light guide layer is arranged to fit the actual pattern of the decorative elements in the decorative layer. That is, a light out-coupling structure corresponding to the pattern of the decorative layer as projected in a direction normal to the lighting device is provided as a rough surface. Thereby, light is coupled between the light guide layer and the decorative layer at the area of the actual pattern which is then more efficiently illuminated.

According to an embodiment of the lighting device, the light intensity provided into top light guide layer 101 is selected to be less than the light intensity provided into the bottom light guide layer 105. Thereby, any light which is be outputted upwards from the top light guide layer, i.e. and originating directly from the light source or via reflections within the top light guide layer 101, and which may overshadow the light from the decorative layer 103, is reduced. Light which is out-coupled from the upper surface 105a of the bottom light guide layer 105 will transmit through the decorative layer 103 and eventually emit upwards from the top light guide layer 101. The arrangement provides that light that originates directly from the top light guide layer 101, as described above, will appear to the viewer as if he/she is looking directly into a lamp. It will appear very bright, without any structure or texture. This is an effect which is normally kept as small as possible, e.g. by utilizing a low brightness in the top light guide layer 101, as compared to the bottom light guide layer 105. On the contrary, the light from the bottom light guide layer 105 will be partly blocked by the decorative layer 103. The decorative elements, here stars, will appear as shadows in front of a light/bright uniform surface, which is a desirable effect.

In an alternative embodiment, the light out-coupling structure of the lower surface 101b of the top light guide layer 101 comprises V-grooves arranged in the surface. In this way light reflected off of the decorative layer 103 has an angle with respect to the normal of the lower surface 101b of the top light guide layer 101. Thereby, no light overshadowing arises.

In an embodiment of the lighting device, the lighting device is further arranged having a reflective layer on the lower surface 105b of the bottom light guide layer 105 (not shown). Thereby, any light being emitted downwards in the bottom light guide layer 105 is reflected back upwards. The reflective layer is provided in any suitable reflective material, e.g. a metal film, a dielectric multi-layer coating, or a White 97 film.

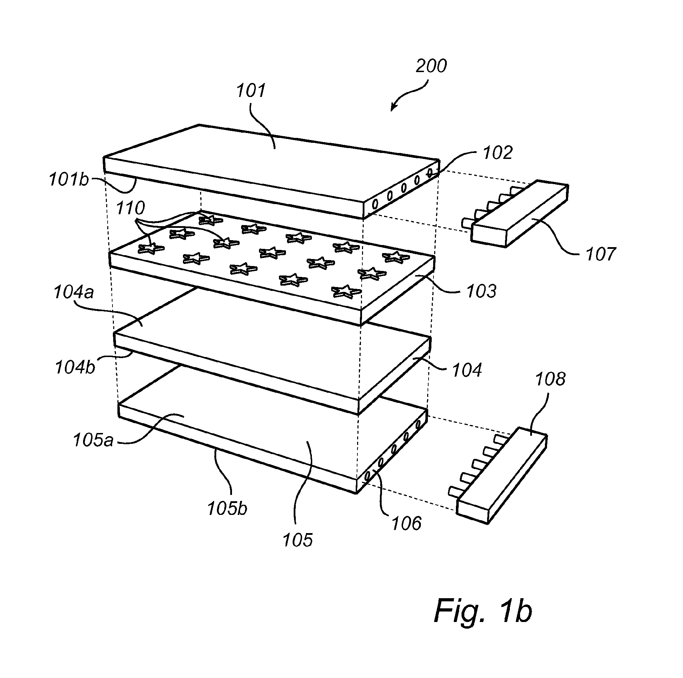

According to an embodiment of the lighting device 200, as illustrated in Fig. 1b, the lighting device 200 is provided with a reinforcing layer 104 for providing mechanical stability of the lighting device 200.

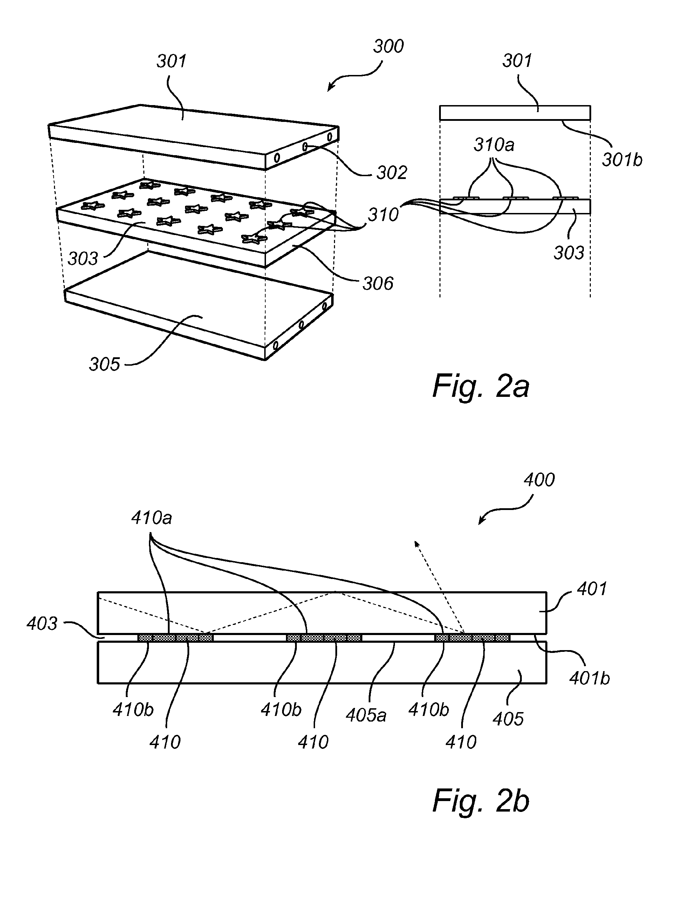

In an embodiment of the lighting device according to the present inventive concept, as described with reference to Figs. 2a and 2b, the light out-coupling structure is, contrary to the embodiments as described above, provided by the decorative layer 303 itself. Light for illumination of the decorative layer 303 is arranged by means of using decorative elements 310 of the decorative layer 303 as light out-coupling structure. The lighting device 300 has the same basic structure as described for lighting device 200 above. That is, a decorative layer 303 is sandwiched between a top light guide layer 301 and a bottom light guide layer 305, which are arranged to receive light from at least one light source (not shown in Fig. 2a). (A single common light source may be applicable.) The top light guide layer 301 and the bottom light guide layer 305 are transparent or translucent. On top of a carrier layer 306 the decorative elements 310 are arranged as a relief pattern. That is, the non-transparent decorative elements 310 form a pattern that is at least partly raised from the surface of the carrier layer 306. An upper surface of the relief pattern, i.e. the top surfaces 310a of the decorative elements 310, see the cut out exploded detail in Fig. 2a, is arranged in optical contact with the lower surface 301b of the top light guide layer 301, thereby providing a light out-coupling structure such that the relief pattern is illuminated by light from the light guide. Light that is accepted into the top light guide layer 301 via the light in-coupling edge surface 302 will only be extracted from the top light guide layer 301 at the positions where the raised non-transparent decorative elements 310 of the decorative layer 303 make optical contact with the top light guide layer 301.

According to an embodiment of the lighting device 400 as illustrated in Fig. 2b, the decorative layer 403 is consisting of decorative elements 410 arranged as a relief pattern on the bottom light guide layer 405. An upper surface of the relief pattern 410a is arranged in optical contact with the lower surface 401b of the top light guide layer 401 and a lower surface 410b of the relief pattern is arranged in optical contact with an upper surface 405a of the bottom light guide layer 405, thereby providing a light out-coupling structure arranged on both sides of the relief pattern of the decorative layer 403. This provides for a lighting device 400 which can be viewed from both sides of the lighting device, in which a high contrast relief pattern is exposed.

As illustrated in Fig. 2b, as the top light guide layer 401 does not have any light out-coupling structures of its own, light injected into the top light guide 401 layer on one side (left edge in Fig. 2b), will travel through to the other side, unless when being incident on a light out-coupling structure. Since the interface between the lower surface 401b and the upper surface 410a of the relief pattern of decorative layer 403 functions as such a light out-coupling structure, light will only be coupled out in these areas. For a viewer of the lighting device 400, the perception will be that these elements light up.

According to embodiments of the lighting devices as described with reference to Fig. 2a and 2b, the surfaces of the relief patterns, 310a, 410a and/or 410b, are preferably made as smooth as possible to obtain a good optical contact with an adjacent surface of the top- or bottom light guide layer. In alternative embodiments, the material of the decorative elements 310a, 410a and/or 410b, is selected such that their surfaces are deformable, such that by applying an external pressure, the surfaces and an adjacent surface of the top- or bottom light guide layer make good optical contact between the light guide layer and the decorative layer. In alternative embodiments, these surfaces are arranged to contain glue or a liquid for providing a good optical contact between the light guide layer and the decorative layer.

The present inventive concept is applicable in providing decorated indoor/outdoor areas and may be used to create specific atmosphere in a premises etc.

Above, embodiments of the lighting device and method according to the present invention as defined in the appended claims have been described. These should be seen as merely non-limiting examples. As understood by a skilled person, many modifications and alternative embodiments are possible within the scope of the invention.

It is to be noted, that for the purposes of this application, and in particular with regard to the appended claims, the word "comprising" does not exclude other elements or steps, that the word "a" or "an", does not exclude a plurality, which per se will be apparent to a person skilled in the art.

## Claims

1. A lighting device (100) comprising:
- at least one light source (107, 108),
- a top light guide layer (101) arranged for receiving light from the at least one light source (107, 108),
- a bottom light guide layer (105) arranged for receiving light from the at least one light source (107, 108),
- a decorative layer (103) sandwiched between the top light guide layer (101) and the bottom light guide layer (105),
wherein at least one light out-coupling structure is arranged for providing illumination of the decorative layer (103), and
wherein the lighting device is arranged such that the decorative layer receives light from both the top light guide layer (101) and the bottom light guide layer (105).

2. A lighting device according to claim 1, wherein each light out-coupling structure is arranged at one of an upper surface of said top light guide layer (101a), a lower surface of said bottom light guide layer (105b), or an interface between said decorative layer (103) and said top light guide layer or said bottom light guide layer.

3. A lighting device according to claim 1 or 2, wherein said top light guide layer (101) and said bottom light guide layer (105) further comprises a respective light in-coupling structure (102, 106) arranged for receiving light from said light source (107, 108).

4. A lighting device according to any preceding claim, wherein at least one light out-coupling structure is arranged by means of providing a microstructure.

5. A lighting device according to claim 4, wherein said microstructure is provided by means of laser dotting, sand blasting, screen printing of dots of paint, laser ablation, sand blasting, or molding a microstructure.

6. A lighting device according to any preceding claim, wherein at least one light out-coupling structure is arranged by means of decorative elements (310, 410) of the decorative layer (103, 403).

7. A lighting device according to claim 6, wherein said decorative layer is arranged by decorative elements (310) arranged as a relief pattern on a carrier layer (306), wherein an upper surface of said relief pattern (310a) is arranged in optical contact with said lower surface of said top light guide layer (301b), thereby providing a light out-coupling structure.

8. A lighting device according to claim 6, wherein said decorative layer (403) is consisting of decorative elements (410) arranged as a relief pattern on said bottom light guide layer (405), wherein an upper surface of said relief pattern (410a) is arranged in optical contact with said lower surface of said top light guide layer (401b), and a lower surface of said relief pattern (410b) is arranged in optical contact with an upper surface of said bottom light guide layer (405a), thereby providing said light out-coupling structure.

9. A lighting device according to any of claims 6 to 8, wherein at least a portion of the upper or lower surfaces of said relief pattern is arranged to be or comprise one of a smooth surface, a deformable surface, and a liquid or sticky surface.

10. A lighting device according any preceding claim, wherein said decorative elements are at least one of non-transparent, reflecting, colored, and diffuse.

11. A lighting device according to any preceding claim, wherein at least one of said top light guide layer and said bottom light guide layer is a liquid curable resin.

12. A lighting device according to any preceding claim, further comprising a reinforcing layer (104).

13. A lighting device according to any preceding claim, wherein said decorative layer is made of fabric, leaves or other natural and/or synthetic materials.

14. A lighting device according to any preceding claim, wherein said top light guide layer and said bottom light guide layer each is one of a transparent and a translucent layer.

15. A lighting device according to any preceding claim, further comprising a reflective layer.
